# EUROPEAN PATENT APPLICATION

(11) **EP 0 808 709 A2**
(43) Date of publication of application: **26.11.1997**
(21) Application number: 97303432.5
(22) Date of filing: 20.05.1997
(51) Int. Cl.: B31B 19/90

(54) **Trap printing method for bone-in meat containers**

(30) Priority: 24.05.1996 US 653524
(71) Applicant: W.R. Grace & Co.-Conn., New York New York 10036 (US)
(72) Inventor: Ennis, Gary D., Wichita Falls, Texas 76308 (US)
(74) Representative: Barlow, Roy James

(57) **Abstract**

A bag (1) is adhered to a bone guard patch (2) which has been reverse printed (3). Adhesion can be obtained by corona treating a surface of the patch and/or the bag, without the need for an adhesive composition. The patch can optionally be heat shrinkable. Also disclosed is a bag adhered with an adhesive composition to a non-heat shrinkable bone guard patch which has been reverse printed.

## Description

### FIELD OF THE INVENTION

This invention relates to a reverse trap printed patch bag, a package made therefrom, and a method for making the bag.

### BACKGROUND OF THE INVENTION

Transparent or translucent plastic bags are often used in the packaging of fresh meats and poultry. Bags having a "bone patch" are also commonly used for bone-in primal cuts of meat and for large carcass poultry such as turkey. In addition to protecting the packaged meat product, the patch bag commonly has printed matter visible on the outside of the package. Commonly, the printing is done on the outside surface of the plastic container. In order to offer some protection to the printed matter from abrasive damage a coat of varnish or other protective layer may be applied over the printing. Another known method is to print on the bag outer surface before applying the patch and then providing a layer of adhesive over the printing and adhering the patch to this layer of adhesive. The adhesive may be applied directly over the printing or, preferably, is applied to one surface of the patch material before attaching the patch to the bag over the printing. An improved method of protecting the printing is the use of reverse printing on a second layer of film which is then bonded to the first, product containing, film layer. An example of this type of reverse printed container is disclosed in U.S. Patent No. 5,190,609 issued March 2, 1993 to Lin et al. This reference teaches the use of a heat shrinkable label formed of polyolefin such as polypropylene having a layer of adhesive, a layer of printing and a second layer of adhesive, with or without a second layer of polyolefin film to form a label for adhesive attachment to the outside of a container. This teaching requires an adhesive layer between the printing and the layer of film covering the printing. This reference also discloses the use of a varnish over the printing when the printing is applied to the outer surface of the polyolefin film in a traditional, non-reverse, printing method. A trap printed package for snack foods comprising an outer layer of polypropylene having reverse printing thereon is coated on the printed side with a primer coating which provides bonding adhesion for the PVDC barrier layer attached thereto is disclosed in U. S. Patent No. 4,442,158 issued April 10, 1984 to Distler. An inner surface layer of ionomer resin is also required. U.S. Patent No. 5,302,402 discloses a patch bag with a non-heat shrinkable patch bonded by corona treatment to a heat shrinkable bag. U.S. Patent No. 5,447,591 (Ennis) discloses a heat shrinkable bag having a protective heat shrinkable reverse printed bone guard patch attached thereto. The bag is made from an oriented, heat shrinkable, thermoplastic tubing. In making the patch bag, after reverse printing at least one desired graphic on one surface of the bone guard patch film, an adhesive composition is applied over the reverse printed surface of the bone guard patch film and over the reverse printing. U.S. Patent Nos. 5,302,402 and 5,447,591 are incorporated herein by reference in their entirety.

While the procedure and package disclosed in '591 Ennis has proven to be an effective way of adhering the reverse printed patch to the film, it is desirable to make a patch bag without the added cost and process step of using an adhesive composition.

It is also desirable to provide the benefits of a reverse printed patch bag in connection with a non-heat shrinkable patch.

In the present invention, a reverse printed patch is adhered to a thermoplastic tubing by corona treating the tubing, and/or the reverse printed patch, prior to assembly of the patch and tubing, and without the need for an adhesive composition.

Also disclosed is a reverse-printed patch bag with or without an adhesive composition for bonding the patch to the bag, in which the patch is non-heat shrinkable.

### SUMMARY OF THE INVENTION

In a first aspect, a method of making a heat shrinkable bag having a reverse printed bone guard patch attached thereto comprises providing a thermoplastic bone guard patch film; reverse printing a desired graphic on a surface of said bone guard patch film; corona treating a surface of an oriented, heat shrinkable, thermoplastic tubing; bonding the reverse printed bone guard patch film onto the corona-treated surface of the oriented, heat shrinkable, thermoplastic tubing without an adhesive composition; and forming a bag from the bone guard patch adhering thermoplastic tubing; thereby producing an oriented, heat shrinkable, thermoplastic bag having a reverse printed bone guard patch.

In a second aspect, a bone-in meat container comprises a bone-in fresh red meat; an oriented, heat shrinkable, thermoplastic bag containing the bone-in fresh red meat, the bag having an outer corona-treated surface and an inner surface; a thermoplastic bone guard patch film adhered to the outer corona-treated surface of the oriented, heat shrinkable, thermoplastic bag, the bone guard patch film having an outer surface and an inner surface; and printing indicia disposed on the inner surface of the bone guard patch film in a reverse print format; such that the reverse printing is disposed between the inner surface of the bone guard patch film and the outer corona-treated surface of the oriented, heat shrinkable, thermoplastic bag; wherein a space defined by and between the corona-treated surface of the oriented, heat shrinkable, thermoplastic bag and the reverse printed inner surface of the bone guard patch film is substantially free from an adhesive composition.

In a third aspect, a method of making a heat shrinkable bag having a thermoplastic reverse printed bone guard patch attached thereto comprises providing a bone guard patch film; reverse printing a graphic on a surface of said bone guard patch film; corona treating the reverse printed surface of said bone guard patch film; bonding the reverse printed, corona-treated surface of said bone guard patch film onto an oriented, heat shrinkable, thermoplastic tubing without an adhesive composition; and forming a bag from the heat shrinkable bone guard patch adhering thermoplastic tubing; thereby producing an oriented, heat shrinkable, thermoplastic bag having a reverse printed bone guard patch.

In a fourth aspect, a bone-in meat container comprises a bone-in fresh red meat article; an oriented, heat shrinkable, thermoplastic bag containing the bone-in fresh red meat, the bag having an outer surface and an inner surface; a thermoplastic bone guard patch film adhered to the outer surface of the oriented, heat shrinkable, thermoplastic bag, the bone guard patch film having an outer surface and an inner, corona-treated surface; and printing indicia disposed on the inner corona-treated surface of the bone guard patch film in a reverse print format; such that the reverse printing is disposed between the inner corona-treated surface of the bone guard patch film and the outer surface of the oriented, heat shrinkable, thermoplastic bag, and a space defined by and between the inner reverse printed corona-treated surface of the bone guard patch film and the outer surface of the oriented, heat shrinkable, thermoplastic bag is substantially free from an adhesive composition.

In a fifth aspect, a method of making a heat shrinkable bag having a thermoplastic non-heat shrinkable reverse printed bone guard patch attached thereto comprises providing a thermoplastic sheet of non-heat shrinkable bone guard patch film; reverse printing a graphic on a surface of said non-heat shrinkable bone guard patch film; applying an adhesive composition over the reverse printed surface of said non-heat shrinkable bone guard patch film; adhesively bonding the reverse printed and adhesive layered bone guard patch film onto an oriented, heat shrinkable, thermoplastic tubing; and forming a bag from the non-heat shrinkable bone guard patch adhering thermoplastic tubing; thereby producing an oriented, heat shrinkable, thermoplastic bag having a reverse printed non-heat shrinkable bone guard patch thereon, such that the reverse printing is disposed between the surface of the bone guard patch and the adhesive composition.

In a sixth aspect, a bone-in meat container comprises a bone-in fresh red meat article; an oriented, heat shrinkable, thermoplastic bag containing the bone-in fresh red meat, the bag having an outer surface and an inner surface; a thermoplastic non-heat shrinkable bone guard patch film adhered to the outer surface of the oriented, heat shrinkable, thermoplastic bag, the bone guard patch film having an outer surface and an inner surface; printing indicia disposed on the inner surface of the non-heat shrinkable bone guard patch film in a reverse print format; and an adhesive composition disposed between the inner surface of the non-heat shrinkable bone guard patch film, and the outer surface of the oriented, heat shrinkable, thermoplastic bag, such that the reverse printing is disposed between the inner surface of the non-heat shrinkable bone guard patch film and the adhesive composition.

### BRIEF DESCRIPTION OF THE DRAWINGS

In the drawings which are appended hereto and make a part of this disclosure:

FIG. 1 is a plan view of a thermoplastic heat shrinkable container having a reverse printed bone guard patch attached to the surface thereof.

FIGS. 2, 3, and 5 are schematic side view blow-ups of a thermoplastic heat shrinkable bone patch container of the present invention.

FIG. 4 is a schematic of a process of making the patch film of the invention.

### DESCRIPTION OF THE PREFERRED EMBODIMENTS

Many cuts of meat have bones that are on the side of the product and/or at the ends of the product. Examples of side bones products include, for example, short loin, spareribs, short ribs and picnics. Picnics and hams are examples of end bone products. The present invention provides a bone guard patch container having good protection against bag rupture and providing improved reverse trap printing thereon.

The present invention will be better understood from the specification taken in conjunction with the accompanying drawings in which like reference numeral refer to like parts.

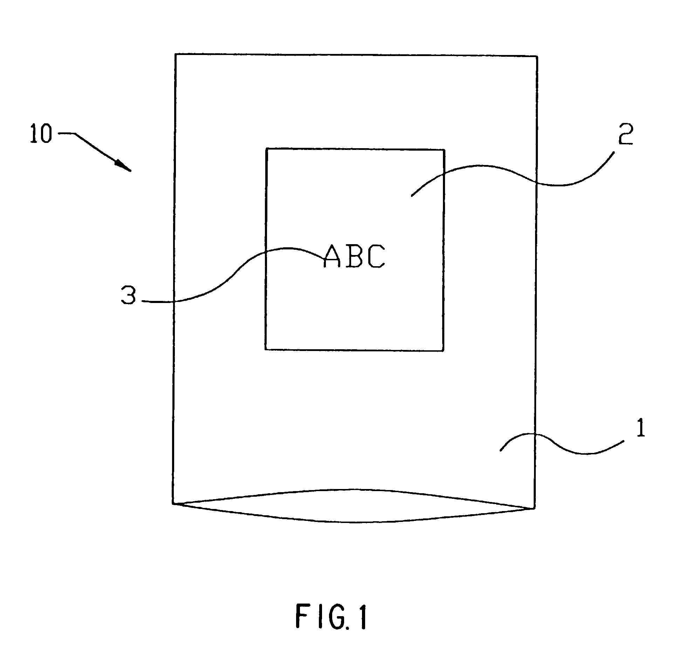

Referring now to FIG. 1, there is shown a bone patch containing thermoplastic container 10 comprising a heat shrinkable thermoplastic bag 1 having a thermoplastic bone guard patch 2 bonded thereto, said thermoplastic bone guard patch having a graphic 3 reverse printed thereon.

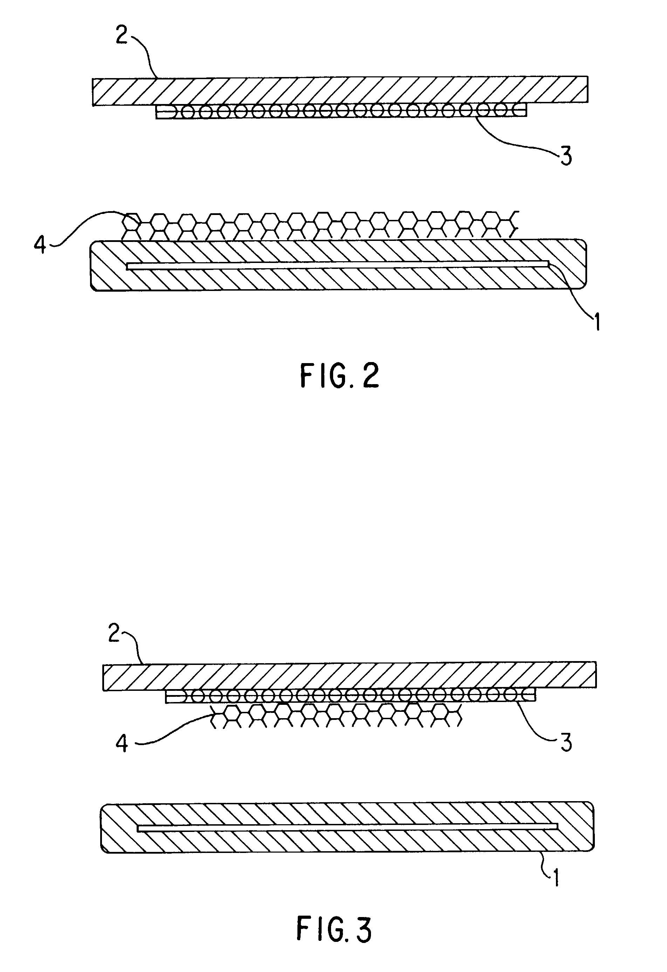

FIGS. 2 and 3 are cross sectional views of alternative embodiments of the container of the present invention comprising a heat shrinkable thermoplastic bag 1, a thermoplastic bone guard patch 2 with a reverse printed graphic 3 printed thereon, and reference numeral 4 representing a corona-treated surface. In Figure 2, this surface is an outer surface of bag 1. In Figure 3, this surface is an inner, reverse-printed surface of patch 2. In either case, corona treatment of the relevant surface is done before the thermoplastic bone guard patch 2 is applied to the heat shrinkable thermoplastic bag 1.

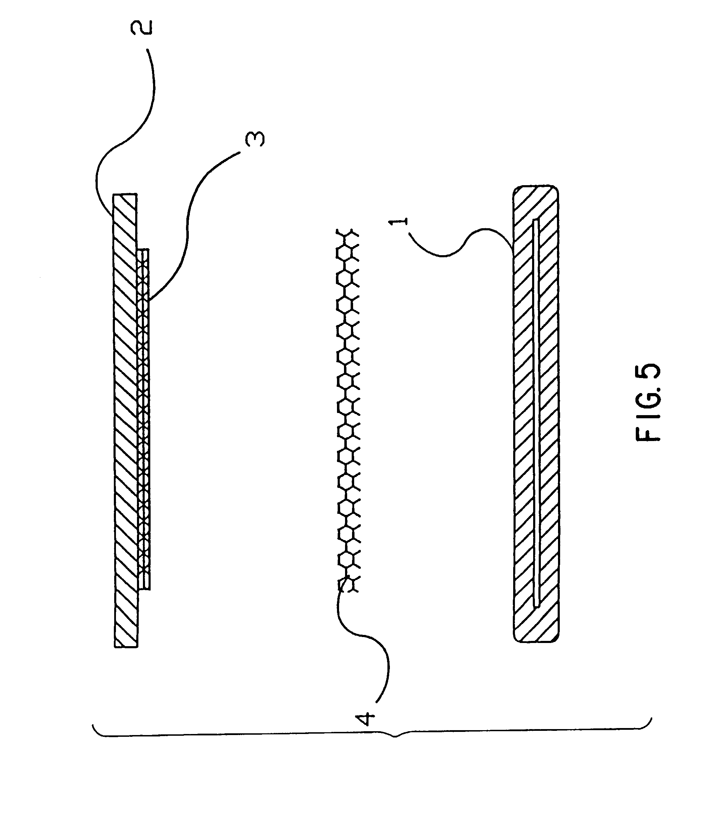

In FIG. 5, a cross sectional view of another embodiment of the present invention shows a heat shrinkable thermoplastic bag 1, a non-heat shrinkable thermoplastic bone guard patch 2 with a reverse printed graphic 3 printed thereon, and reference numeral 4 representing in this particular embodiment a layer of adhesive which is preferably applied to the non-heat shrinkable bone guard patch 2 over the reverse printed graphic 3 before the patch 2 is applied to bag 1.

Although reference numeral 1 herein refers to a bag, it can alternatively or also refer to bag tubing from which a bag is made e.g. by cutting a segment of the tubing, and making appropriate seals as needed.

The patch of the invention is preferably crosslinked, but can be uncrosslinked. The patch is preferably oriented, but can be unoriented. The patch is preferably heat shrinkable, but can be non-heat shrinkable. The bag or tubing 1 is preferably crosslinked, but can be uncrosslinked. The bag or tubing 1 is preferably oriented, but can be unoriented. The bag or tubing 1 is preferably heat shrinkable, but can be non-heat shrinkable.

A preferred thermoplastic bone guard patch material comprises four layers. The two outer layers are composed of 87% by weight of linear low density polyethylene, 10% by weight of ethylene-vinyl acetate copolymer having 9% vinyl acetate, and 3% pigments and other additives to aid in extrusion. The preferred linear low density polyethylene is Dowlex 2045 from Dow Chemical Company of Midland, Mich. and the preferred ethylene-vinyl acetate copolymer is ELVAX 3128 from the DuPont Company of Wilmington, Del. The inner two layers comprise ethylene-vinyl acetate copolymer ELVAX 3128. All layers have been cross-linked by irradiation to dosage level which is equivalent to 7 MR.

The embodiment as described above is a preferred one but a suitable patch for use in the present invention can be made where the two outer layers comprise 15% ethylene-vinyl acetate copolymer having 9% vinyl acetate and 83.3% linear low density polyethylene with the balance of 1.7% being a pigment. In addition, suitable patches can be made with the outer layers comprising a blend of 90% linear low density polyethylene with 10% vinyl acetate copolymer. Based on experience it is believed that the desirable composition range for the outer layer is 80% to 100% linear low density polyethylene and 20% to 0% ethylene-vinyl acetate copolymer with the vinyl acetate content having a range from 7% to 12% vinyl acetate. The inner layers preferably comprise an ethylene vinyl acetate copolymer having 20% to 35% acetate content.

Typical vacuum bags are made according to the process shown in U. S. Patent No. 3,741,253 issued on June 26, 1973 to Harri J. Brax et al. The method of the Brax et al patent is well understood in the art and provides background for the description which follows for the method of making the bone guard patch container of the present invention.

Presently preferred vacuum bags may be made of tubing having four layers comprising, an outer layer (food side) layer of ELVAX 3128 EVA copolymer, a first inner layer of a blend comprising 80% by weight Dowlex 2045 from Dow Chemical, plus 20% by weight of EZ705-0009 from Quantum Chemicals, a second inner layer of saran, and a second outer layer of ELVAX 3128 EVA copolymer. Another preferred vacuum bag film formulation may be made from tubing having an outer layer (food side) comprising a blend of 90% by weight of NA 295-000 from Quantum Chemicals and 10% by weight Dowlex 2045 or comprising 85% by weight of Dowlex 2045 and 15% By weight of Quantum EA719-009, a first inner layer (18) of a blend comprising 80% by weight Dowlex 2045 from Dow Chemical, plus 20% by weight of EZ705-0009 from Quantum Chemicals, a second inner layer (20) of saran, and a second outer layer (16) comprising 92.5% by weight of an EVA copolymer LD 318.92 from Exxon plus 7.5% by weight of Dowlex 2045.

To make the patch of one embodiment of the present invention, a first ethylene-vinyl acetate copolymer having a vinyl-acetate content of approximately 28% by weight is sent to a first extruder. This material forms the inner two layers. Also, a blend having a major proportion of linear low density polyethylene and a minor proportion of a second ethylene-vinyl acetate copolymer, one having a vinyl acetate content in the range of 7% to 12%, is fed into a second extruder. This material forms the outer two layers. Both extruders feed a common coextrusion die of the type which is well-known in the art. The extrudate which issues from the dies has an inner wall of the first ethylene/vinyl acetate copolymer and an outer wall of the blend. This type of coextrusion essentially coextrudes two concentric tubes, one inside the other, and in this case the first ethylene/vinyl acetate copolymer is the inner tube.

As the tube is extruded downwardly it is closed off and flattened by pinch rollers, but in order to keep the first ethylene/vinyl acetate copolymer from adhering to itself, the interior of the tube is coated with an inert dust or powder, preferably powdered cornstarch, in a surface concentration sufficient to prevent self-adherence. This flattened tubing is then fed through an irradiation vault where it will preferably receive a dosage of approximately 7 MR to cross-link the polymeric materials which comprise the tube. The preferred range is 4.5 MR to 13 MR with the most suitable range being between 6 and 8 MR. Chemical cross-linking using an organic peroxide is thought to be an alternate cross-linking method but quite satisfactory results are obtained through use of irradiation and irradiation cross-linking is preferred. After receiving the cross-linking dosage the tube is heated, opened, inflated, and stretched by the well-known bubble technique which is described in the above mentioned Brax et al. patent. The biaxially stretching orients the tube material. After the material has been stretched to the desired diameter and wall thickness, it is then rapidly cooled and collapsed. This process results in a biaxially oriented heat shrinkable patch material which is heat shrinkable at approximately the temperature at which it was oriented. When collapsed and flattened the tubing will now tend to adhere to itself as the stretching decreases the concentration of the corn starch on the inner surface of the bubble or stretched tubing. This concentration of the corn starch now is low enough to permit self-adherence. The vinyl acetate content of the inner wall is approximately 28% by weight. This is an ethylene-vinyl acetate copolymer in the range where the ethylene-vinyl acetate copolymer acts as an adhesive. Thus, a multi-layer tubular material is produced, in this instance, a four layer material is produced.

This material is then run through a printing operation to place desired graphics in reverse print orientation onto one surface of the material. This can be done using flexographic printing presses and flexographic printing methods well understood in the label printing art. A suitable flexographic printing press is, for example, the Model 5055 Industrial Marking Equipment flexographic printing press. Inks suitable for use in the present invention include, for example, ink extender RD800, white ink RD501, red ink RD803, purple ink RD180, blue ink RD812 and black ink RD814 available from Flint.

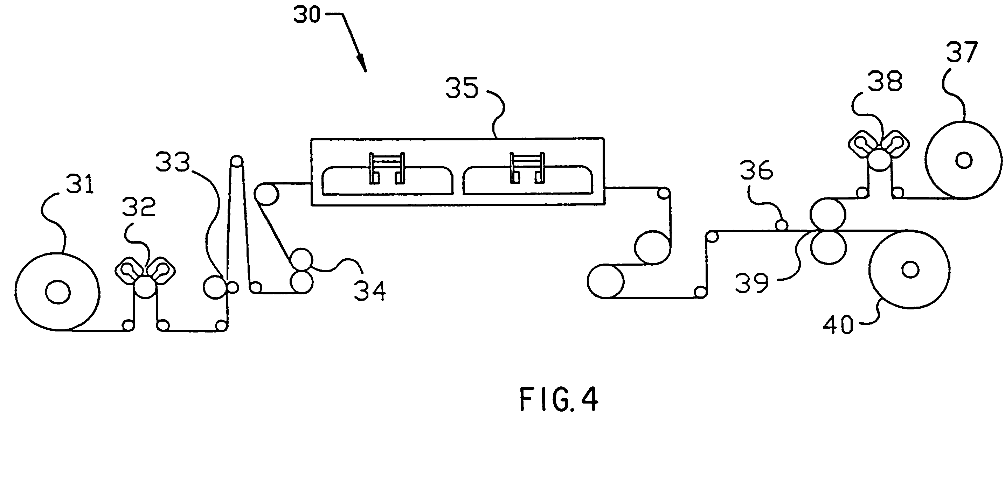

One preferred embodiment for using flexographic printing to produce the reverse printing of the present invention is shown generally as 30 in FIG. 4. FIG 4 is a schematic representation of one preferred process of making the trap printed bone-in patches comprising a patch film unwind means 31, a film treater means 32, a printing means 33, a dryer 35, a cutting means 36, a tubing web unwind means 37, a tubing web treater means 38, a tubing web to patch film bonding means 39 and a product rewind means 40. The patch film is unwound from unwind means 31 and then passes through corona treating means 32 after which the now treated film is printed on a preferably flexographic printing means 33, after which the reverse printed patch film is introduced to a drying means 35 and then cut to size, using a cutting means 36, such as a knife cutting means, to create discrete patches. The reverse printed and sized patches are then introduced into a bonding means 39 where they are bonded, in a desired position, to a film tubing web fed from tubing web unwind means 37 and through corona treating means 38. The result is patch-laminated lay-flat tubing which is then collected on a rewind means 40. Patch bags of the invention can be suitably cut from the patch-laminated lay-flat tubing.

Alternatively, individual bags, preferably heat shrinkable, can be made by conventional means, corona treated, and then adhered to appropriately sized individual patches which are also preferably heat shrinkable.

In an alternative embodiment, a process like that shown graphically in Figure 4 can be used, but in which coating means 34 coats the reverse printed surface of the patch film. Many suitable adhesives to adhere the non-heat shrinkable reverse printed patch to the bag are available and can readily be selected by those skilled in the art. Examples of suitable types of adhesive include thermoplastic acrylic emulsions, solvent based adhesives and high solids adhesives. The presently preferred adhesive is a thermoplastic acrylic emulsion RhoplexN 619 from Rohm & Haas.

Although the illustrative embodiments of the present invention have been described herein with reference to the accompanying drawings it is to be understood that the invention is not limited to those precise embodiments, and that various other changes and modifications may be effected therein by one skilled in the art without departing from the scope of the invention.

## Claims

1. A method of making a heat shrinkable bag having a thermoplastic reverse printed bone guard patch attached thereto comprising:
(a) providing a thermoplastic bone guard patch film;
(b) reverse printing a graphic on a surface of said bone guard patch film;
(c) corona treating a surface of an oriented, heat shrinkable, thermoplastic tubing;
(d) bonding the reverse printed bone guard patch film on to the corona-treated surface of the oriented, heat shrinkable, thermoplastic tubing without an adhesive composition; and
(e) forming a bag from the bone guard patch adhering thermoplastic tubing;
thereby producing an oriented, heat shrinkable, thermoplastic bag having a reverse printed bone guard patch.

2. A method of making a heat shrinkable bag having a thermoplastic reverse printed bone guard patch attached thereto comprising:
(a) providing a thermoplastic bone guard patch film;
(b) reverse printing a graphic on a surface of said bone guard patch film;
(c) corona treating the reverse printed surface of said bone guard patch film;
(d) bonding the reverse printed corona-treated bone guard patch film on to an oriented, heat shrinkable, thermoplastic tubing without an adhesive composition; and
(e) forming a bag from the bone guard patch adhering thermoplastic tubing;
thereby producing an oriented, heat shrinkable, thermoplastic bag having a reverse printed bone guard patch.

3. The method of claim 1 or 2, wherein said bone guard patch is heat shrinkable.

4. A method of making a heat shrinkable bag having a thermoplastic reverse printed bone guard patch attached thereto comprising:
(a) providing a thermoplastic non-heat shrinkable bone guard patch film;
(b) reverse printing a graphic on a surface of said non-heat shrinkable bone guard patch film;
(c) applying an adhesive composition over the reverse printed surface of said non-heat shrinkable bone guard patch film;
(d) adhesively bonding the reverse printed non-heat shrinkable bone guard patch film on to an oriented, heat shrinkable, thermoplastic tubing; and
(e) forming a bag from the non-heat shrinkable bone guard patch adhering thermoplastic tubing;
thereby producing an oriented, heat shrinkable, thermoplastic bag having a reverse printed non-heat shrinkable bone guard patch.

5. A method according to any one of the preceding claims, wherein said bone guard patch is cross-linked.

6. A method according to any one of the preceding claims, wherein said bone guard patch is oriented.

7. A method according to any one of the preceding claims, wherein said bags are side seal bags.

8. A method according to any one of the preceding claims, wherein said bags are end seal bags.

9. A method according to any one of the preceding claims, wherein said bone guard patch comprises a multiple layer film.
